# DEMANDE DE BREVET EUROPEEN

(11) **EP 1 998 084 A1**
(43) Date de publication de la demande: **03.12.2008**
(21) Numéro de dépôt: 08305132.6
(22) Date de dépôt: 25.04.2008
(51) Int. Cl.: F16H 61/684, F16D 11/10, F16H 61/04, F16H 3/089

(54) **Boîte de vitesses à crabots auto-éjectants et procédé de changement de rapport associé**

(30) Priorité: 22.05.2007 FR 0755176
(71) Demandeur: Peugeot Citroën Automobiles SA, 78140 Vélizy-Villacoublay (FR)
(72) Inventeur: Lelasseux, Xavier, 92150, Suresnes (FR); De Croutte, Arnaud, 78530, Buc (FR); Le Dren, Arnaud, 91230, Montgeron (FR); Mitchell, Clément, 92250, La Garenne Colombes (FR)

(57) **Abrégé**

L'invention concerne une boîte (4) de vitesses de type manuelle pilotée (BVMP) qui comporte des manchons de crabotage (27-29) associables chacun à deux pignons fous munis de crabots (40). Ces manchons de crabotage (27-29) assurent le changement des rapports de vitesse. Dans l'invention, les crabots des manchons (27-29) et des pignons fous sont auto-éjectants, c'est-à-dire qu'ils présentent une géométrie telle qu'ils éjectent le rapport précédent lorsque le nouveau rapport est engagé, sans rupture de couple. L'invention permet donc de changer de rapport de démultiplication sans rupture de couple.

## Description

L'invention concerne une boîte de vitesses à crabots auto-éjectants et un procédé de changement de rapport associé. L'invention a notamment pour but d'améliorer le ressenti des changements de rapports en évitant les ruptures de couple.

L'invention trouve une application particulièrement avantageuse dans le domaine des boîtes de vitesses manuelle pilotée (BVMP) pour véhicule automobile. Toutefois, l'invention peut également être mise en oeuvre avec les véhicules à deux roues motorisés.

Les véhicules connus comportent une chaîne de traction formée par un dispositif de propulsion (formé par un moteur thermique et/ou une machine électrique), un embrayage, et une boîte de vitesses qui entraîne les roues du véhicule. L'embrayage est relié d'une part au dispositif de propulsion et d'autre part à la boîte de vitesses, elle-même reliée aux roues.

Plus précisément, la boîte de vitesses comporte un arbre primaire relié à l'embrayage et un arbre secondaire relié aux roues du véhicule, ces deux arbres étant reliés entre eux par l'intermédiaire d'engrenages formant les rapports de vitesse.

Chaque engrenage comporte une roue liée en rotation à un des arbres et un pignon fou monté sur l'autre arbre. Des manchons de crabotage sont utilisés pour lier sélectivement les pignons fous à l'arbre sur lequel ils sont montés afin d'assurer un passage de vitesse.

A cet effet, le manchon est lié en rotation à son arbre mais est mobile axialement pour permettre l'accrochage avec le pignon fou. On parle de crabotage lorsque le manchon entre en coopération avec le pignon fou de sorte qu'un rapport de vitesse est engagé, et de décrabotage lorsque le manchon se dégage du pignon fou de sorte que le rapport est désengagé.

On connaît le manchon de crabotage simple étage qui présente un jeu de ré-attelage important (le jeu de ré-attelage est le jeu angulaire existant, rapport engagé, entre le pignon fou et le manchon). Ce jeu important est source d'inconfort lorsque le couple transmis change de signe passant de moteur menant à moteur mené, par exemple dans une situation de suivi de file sur autoroute.

Pour éviter cet inconfort, le brevet suisse n°82113 propose des crabots bi-étages qui permettent d'assurer le bon crabotage par une fenêtre importante d'un premier étage et de supprimer le jeu de ré-attelage par un deuxième étage qui verrouille le rapport engagé.

Par ailleurs, les boîtes de vitesses des véhicules de course de type « dragster » comportent des manchons de crabotage qui présentent d'un côté une dent classique et de l'autre une rampe, de sorte que lorsque le sens de rotation s'inverse, le flanc rampe vient naturellement éjecter le crabot en le faisant déplacer axialement.

Le principal défaut de ces manchons de crabotage est l'impossibilité de passer du couple de type frein moteur car le pignon s'éjecte naturellement lors du changement de rapport.

La présente invention se propose de garantir le crabotage même à haute vitesses différentielles, de garantir le bon engagement du rapport même en frein moteur et de garantir l'auto-éjection lors du changement de rapport positif (1 vers 2, ou 2 vers 3 ou 3 vers 4...) de façon à pouvoir effectuer un changement de vitesses sous couple.

A cet effet, les crabots des pignons fous selon l'invention présentent un étage d'engagement muni d'une rampe ménagée dans la face rétro de ces pignons fous. On entend par face rétro la face du crabot qui assure la transmission du couple lorsqu'un couple positif est transmis des roues vers le moteur. En outre, un étage de verrouillage présentant un profil carré ou s'il y a lieu un angle est de préférence ménagé du côté du pignon fou afin de limiter le jeu de ré-attelage.

Le manchon de crabotage associé à deux rapports de vitesses peut prendre notamment trois positions axiales pour chaque rapport : une position rapport verrouillé, une position rapport engagé auto-éjectable et une position neutre rapport dégagé commune avec la position neutre du rapport adjacent.

Par ailleurs, afin de monter les rapports sous couple, les rapports sont organisés de manière à pouvoir engager le rapport N+1 sans dégager le rapport N. Dans un exemple, on organise les couples ainsi : 1-3, 2-5 et 4-6 ou 1-4, 2-5 et 3-6 (alors que dans les boîtes de vitesses connues les rapports consécutifs sont mitoyens c'est-à-dire qu'on a habituellement des couples tels que : 1-2, 3-4 puis 5-6).

En outre, l'invention permet simplement d'engager un rapport sans débrayer (mais il est possible de débrayer légèrement pour diminuer le couple transmissible afin de diminuer le choc) et donc d'avoir un passage montant sans rupture de couple et sans perte d'accélération.

Dans une boîte de vitesses classique, il est nécessaire de débrayer puis de dégager le rapport précédent puis d'engager le rapport suivant puis de ré-embrayer. Ce temps d'action long engendre une rupture de couple qui se traduit par une décélération brutale du véhicule pendant le temps du changement de rapport.

Dans l'invention, le changement de rapport est effectué de la manière suivante :
- on positionne le rapport précédent en position auto-éjectable et on engage le rapport suivant avec son manchon respectif,
- la vitesse de l'arbre primaire chutant instantanément, le flanc auto-éjectant du rapport précédent entre en contact avec le pignon fou du rapport précédent et auto-éjecte donc automatiquement le rapport précédent, et
- on s'assure que le rapport précédent est bien en position neutre.

Ainsi l'invention permet d'une part d'assurer l'engagement du rapport quel que soit le régime différentiel entre les deux pièces à craboter, et d'autre part de solidariser ces deux pièces entre elles de manière à éviter le jeu de ré-attelage source d'inconfort.

De plus, l'invention permet de changer de rapport montant en supprimant la rupture de couple par l'engagement du rapport supérieur sans dégager le rapport inférieur via les rampes des pignons fous.

L'invention concerne donc une boîte de vitesses de type manuelle pilotée (BVMP) comportant :
- un arbre primaire destiné à être relié à un moteur thermique, et un arbre secondaire destiné à être relié aux roues du véhicule, ces deux arbres étant reliés entre eux par des engrenages formant les rapports de vitesse,
- ces engrenages comportant chacun une roue solidaire en rotation d'un des arbres et un pignon fou monté sur l'autre arbre qui engrènent entre eux, et
- des manchons de crabotage associables chacun à deux pignons fous munis de crabots, ces manchons de crabotage assurant le changement des rapports de vitesse,
caractérisée en ce que :
- les crabots des manchons et des pignons fous sont auto-éjectants, ces crabots auto-éjectants étant tels qu'ils éjectent le rapport précédent lorsque le nouveau rapport est engagé, sans rupture de couple.

Selon une réalisation, les crabots des pignons fous présentent un profil avec une rampe du côté de leur face rétro.

Selon une réalisation, la rampe présente une pente comprise entre 10 et 40 degrés.

Selon une réalisation, les manchons de crabotage sont associés à un étage de verrouillage du côté des pignons fous assurant le verrouillage du rapport de vitesse engagé.

Selon une réalisation, les pignons fous sont rassemblés par paire avec un seul manchon de crabotage auto-éjectant par paire, le manchon de crabotage d'une paire engageant l'un des deux pignons fous par déplacement dans une direction et l'autre pignon fou par déplacement dans l'autre direction.

Selon une réalisation, ces paires de pignons fous sont montées soit sur l'arbre primaire soit sur l'arbre secondaire.

Selon une réalisation, les paires de pignons fous sont agencées d'une manière telle, qu'elle permet d'engager deux rapports numériquement successifs avec des manchons de crabotage différents, notamment dans une configuration de rapport (1-4 ; 2-5 ; 3-6) ou (1-3 ; 4-6 ; 2-5).

Selon une réalisation, la combinaison des pignons est telle qu'elle permet d'avoir un mouvement des actionneurs pilotant les crabots dans un même sens pour un passage de rapports de vitesse successifs.

Selon une réalisation, l'arbre primaire est un arbre simple, non concentrique.

Selon une réalisation, la boîte de vitesses comporte un deuxième arbre secondaire.

L'invention concerne en outre un procédé de changement de rapport de vitesses montant avec couple moteur positif pour passer d'un rapport initial à un rapport final, ce procédé mettant en oeuvre la boîte de vitesses selon l'invention, ce procédé comportant les étapes suivantes :
- positionner le crabot du rapport initial en position auto-éjectable,
- engager le rapport final, de sorte que la vitesse de l'arbre primaire chute,
- la face d'éjection des dents du pignon du rapport initial entrant en contact avec les dents du manchon associé au rapport initial de manière à désengager ce rapport initial,
- s'assurer que le rapport initial est désengagé.

L'invention sera mieux comprise à la lecture de la description qui suit et à l'examen des figures qui l'accompagnent. Ces figures ne sont données qu'à titre illustratif mais nullement limitatif de l'invention. Elles montrent :
- figure 1 : une représentation schématique d'une chaîne de traction comportant une boîte de vitesses à 6 rapports selon l'invention ;
- figure 2 : des représentations schématiques des différentes positions a, b, b', c et d possibles que peut prendre un manchon à crabots auto-éjectants selon l'invention ;
- figure 3 : des vues en trois dimensions des crabots d'un manchon et d'un pignon fou selon l'invention ;
- figure 4 : une représentation schématique des états 0, 1, 2, et 3 des manchons des rapports de vitesse lors d'un changement de rapport montant selon l'invention ;
- figures 5 : des représentations schématiques de crabots auto-éjectants à deux étages selon l'invention.

Les éléments identiques conservent la même référence d'une figure à l'autre.

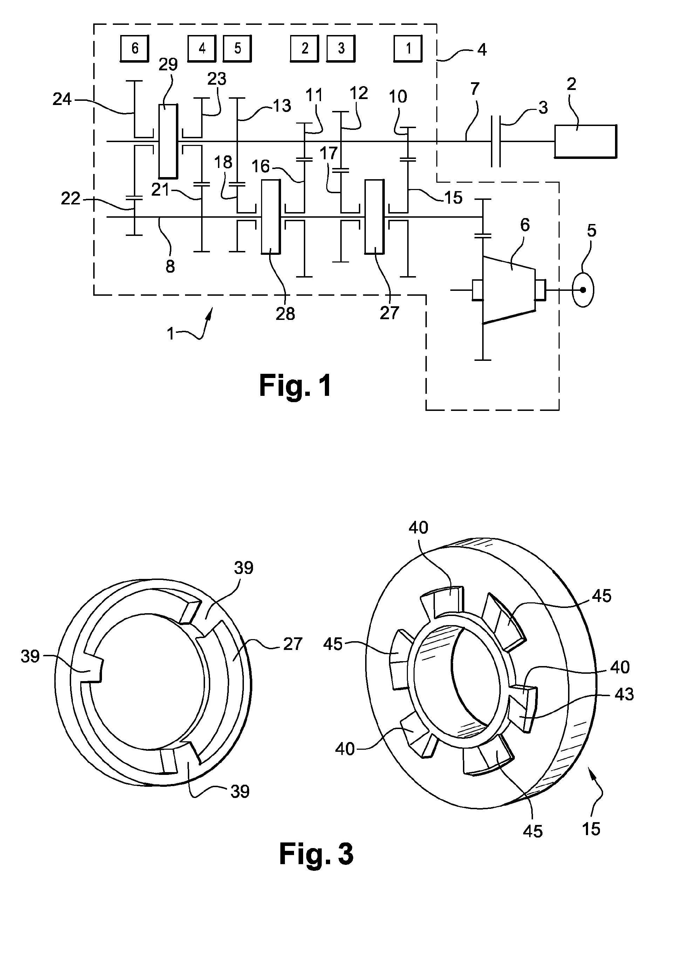

La figure 1 montre une chaîne 1 de traction d'un véhicule formée par un moteur 2 thermique, un embrayage 3, une boîte 4 de vitesses délimitée par une ligne fermée discontinue, et des axes de sortie du différentiel vers les roues 5. L'embrayage 3 est relié d'une part au moteur 2 thermique et d'autre part à la boîte 4 de vitesses, elle-même reliée aux roues 5.

En variante, la chaîne 1 de traction est complétée par une machine électrique (non représentée) positionnée sur l'arbre d'entrée de la boîte 4 de vitesse entre l'embrayage 3 et la boîte 4 de vitesses.

Plus précisément, la boîte 4 de vitesses comporte un arbre 7 primaire relié à l'embrayage 3 et un arbre 8 secondaire relié aux roues 5. Un différentiel 6 assure la liaison entre l'arbre secondaire 8 et les roues 5 du véhicule. L'arbre 7 primaire est un arbre simple et pas un arbre concentrique comme dans la plupart des boîtes de vitesses à double embrayage.

Ces deux arbres 7 et 8 sont reliés entre eux par l'intermédiaire d'engrenages formant les rapports de vitesse 1 à 6 encadrés sur la figure. Les rapports de 1^{ère}, 2^{ème}, 3^{ème} et 5^{ème} sont formés chacun par une roue 10-13 entraînée par l'arbre 7 primaire et un pignon fou 15-18 relié à l'arbre 8 secondaire. Tandis que les rapports de 4^{ème} et 6^{ème} sont formés chacun par une roue 21-22 entraînée par l'arbre 8 secondaire et un pignon fou 23-24 relié à l'arbre 7 primaire.

Les rapports de vitesses sont rassemblés par paire avec un seul manchon à crabots 27-29 qui engage l'un des deux pignons fous des engrenages par déplacement dans une direction et l'autre pignon par déplacement dans l'autre direction.

Ces paires de pignons sont agencées d'une manière permettant d'engager deux rapports numériquement successifs avec des manchons différents: par exemple et de manière non limitative (1-4 ; 2-5 ; 3-6) ou (1-3 ; 4-6 ; 2-5), comme représenté.

Ainsi, les manchons 27 et 28 montés sur l'arbre secondaire 8 sont respectivement positionnés entre les rapports de 1^{ère} et 3^{ème} et entre les rapports de 2^{ème} et de 5^{ème}. Tandis que le manchon 29 monté sur l'arbre 7 primaire est positionné entre les rapports de 4^{ème} et de 6^{ème}.

De préférence, une combinaison de rapports de type (1-4 ; 2-5 ; 3-6) est telle qu'elle permet d'avoir un mouvement des actionneurs pilotant les crabots dans un même sens pour un passage successif: le sens de dégagement du rapport de 1^{ère} est le même que le sens d'engagement du rapport suivant la 2^{ème} et ainsi de suite.

En variante, la boîte 4 de vitesses comporte un deuxième arbre secondaire (non représenté), les paires de pignons fous étant alors réparties entre ces trois arbres.

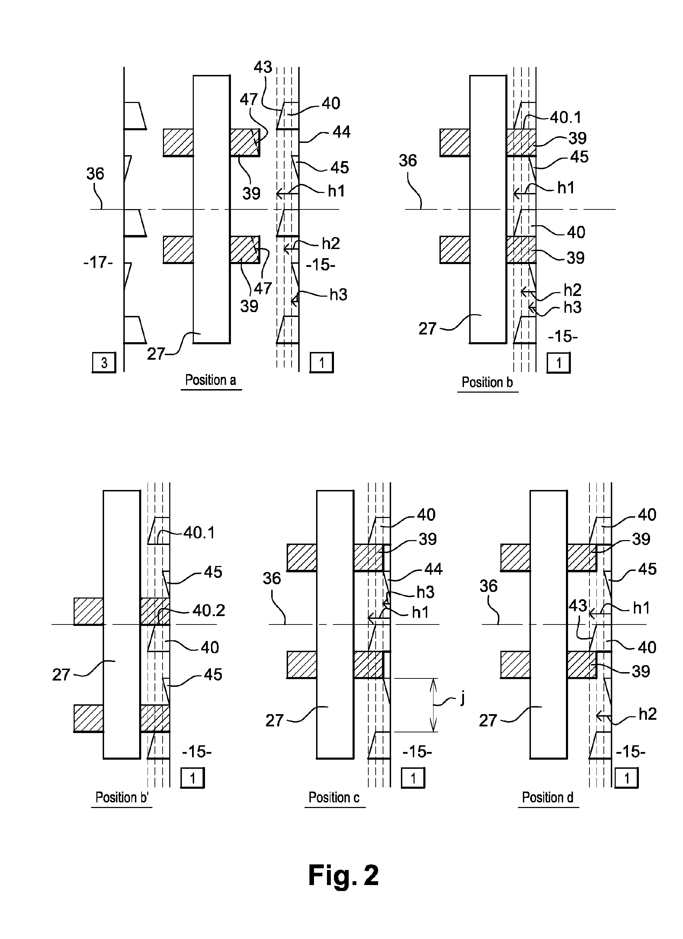

La figure 2 montre des représentations schématiques du manchon de crabotage 27 monté sur l'arbre 8 entre les pignons fous 15 et 17 des rapports de 1^{ère} et de 3^{ème} selon cinq positions a, b, b', c et d, ce manchon étant semblable aux manchons de crabotage 28 et 29.

Les crabots auto-éjectants des pignons fous 15 et 17 et du manchon 27 de crabotage sont appelés crabots à trois étages car ils s'étendent sur trois niveaux : h1, h2 et h3.

Plus précisément, le manchon 27 est lié en rotation sur l'arbre 8 et mobile axialement suivant l'axe 36 de l'arbre 8. Le manchon 27 comporte une couronne de crabots ou dents 39 destinées à entrer en coopération avec des crabots ou dents 40 associées aux pignons fous 15 et 17. Les dents 40 présentent une hauteur h1 par rapport à la face des pignons fous.

En outre, comme représenté sur les figures 2 et 3, chaque pignon 15, 17 comporte des rampes 43 sur le flan rétro 40.2 de ses dents (ce flan rétro assure la transmission du couple lorsqu'un couple positif est transmis des roues du véhicule vers le moteur).

Ces rampes 43 s'étendent entre les niveaux h1 et h2 par rapport à la face 44 du pignon, le niveau h2 étant inférieur à h1. Les dents 40 présentent ainsi un profil en forme de trapèze. Dans une réalisation, ces rampes 43 présentent une inclinaison comprise environ entre 10 et 40 degrés.

De préférence, chaque pignon 15, 17 comporte en outre des étages 45 de verrouillage positionnés régulièrement sur sa face 44 radiale, entre les dents 39. Ces étages 45 présentent une hauteur h3 par rapport à la face 44 des pignons fous, h3 étant inférieur à h2.

Ces étages 45 de verrouillage permettent de limiter le jeu de ré-attelage j entre les dents 39 du manchon et les dents 40 du pignon en position verrouillée. Ces étages 45 présentent un profil triangulaire de manière à faciliter le verrouillage du rapport de vitesse, l'inclinaison des étages 45 étant opposée à celle des rampes 43 (les valeurs des angles d'inclinaison des étages 45 et des rampes 43 ne sont pas forcément égales).

Comme représenté sur la figure 3, les dents 39 sont disposées régulièrement autour du manchon 27, et présentent une dimension égale à la distance qui sépare un étage 45 de verrouillage d'une dent 40.

En variante, les dents 39 présentent également une pente 47 sensiblement identique à celle des étages 45 de verrouillage.

Le manchon de crabotage 27 est apte à prendre cinq positions différentes : une position neutre (position a), une position rapport verrouillé (position b), une position rapport verrouillé avec un jeu de ré-attelage non verrouillé (position b'), une position rapport engagé avec un jeu de ré-attelage important (position c), et une position auto-éjectable (position d).

Dans la position a, neutre, le manchon 27 est positionné entre les pignons 15 et 17 de sorte qu'il est dégagé des rapports de vitesse de 1^{ère} et 3^{ème}. Les dents 39 du manchon 27 sont positionnées à une distance des faces 44 radiales des crabots supérieure à h1. Ainsi, aucun des pignons fous 15, 17 n'est lié en rotation avec l'arbre 8 secondaire.

Dans la position b, rapport verrouillé, les dents 39 du manchon 27 sont bloquées entre les faces 40.1 de tirage des dents 40 et les faces de l'étage 45 perpendiculaires à la face radiale du pignon fou 15. Le pignon fou 15 est alors lié en rotation à l'arbre 8 sur lequel est monté le manchon 27. Lors de la transmission d'un couple moteur, les dents 39 prennent appui sur les faces 40.1 de tirage des dents 40 des pignons.

Tandis que lors de la transmission d'un couple de freinage de type frein moteur, les dents 39 du manchon 27 prennent appui sur les étages 45 de verrouillage. Dans la position b, le jeu de ré-attelage est minimum.

Dans la position b', rapport verrouillé avec un jeu de ré-attelage non verrouillé, les dents 39 sont plaquées contre le pignon fou 15 entre le flan 40.2 rétro des dents 40 et la face inclinée des étages 45. Une telle position est mise en oeuvre par exemple dans le cas d'un changement de rapport descendant. Dans ce cas, dès qu'un couple positif sera transmis du moteur vers les roues, le contact entre les faces 40.2 et 40 n'existera plus et le flanc 45 garantit le passage de la position b' à b.

Dans la position c, rapport engagé avec jeu j de ré-attelage important, les dents 39 se situent à une distance comprise entre h1 et h3 de la face 44 du pignon 15. Une telle position est observable à l'engagement du rapport, avant le verrouillage de ce rapport.

Dans la position d, auto-éjectable, les dents 39 du manchon 27 sont à une distance située entre h1 et h2. Ainsi, les dents 39 peuvent transmettre du couple en prenant appui contre les faces 40.1 lorsque la vitesse de rotation du manchon 27 est supérieure à celle du pignon 15.

Dès que la vitesse de l'arbre 7 primaire diminue et que la vitesse de rotation du pignon 15 devient inférieure à celle du manchon 27, les dents 39 suivent alors la rampe 43 et s'éloignent de la face 44 du pignon fou, de sorte que le rapport de vitesse est dégagé.

Pour assurer les déplacements axiaux du manchon 27, la boîte 4 de vitesses comporte un actionneur (non représenté) commandé par le calculateur de boîte de vitesses.

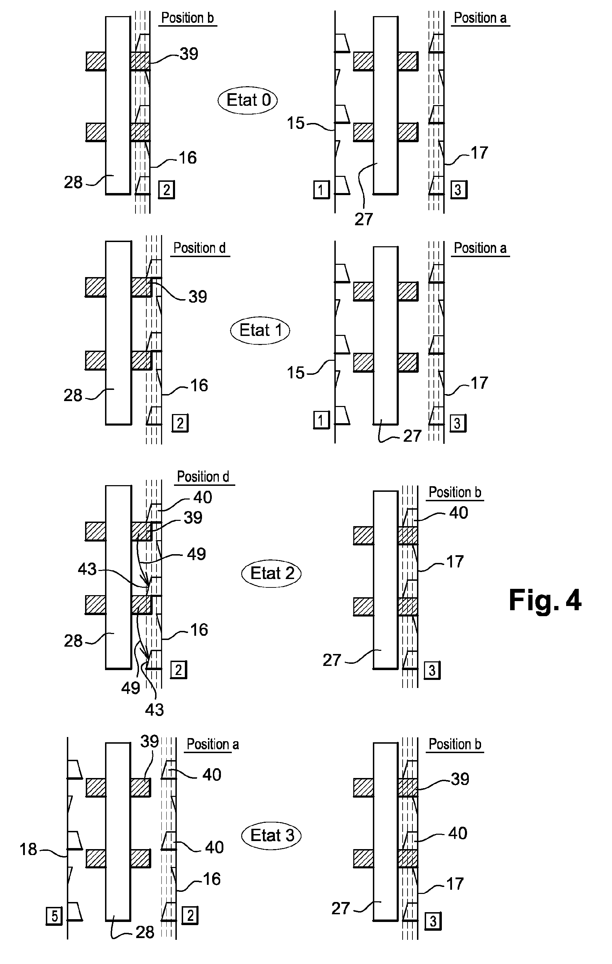

Lors d'un changement de rapport montant du rapport N (par exemple le rapport de 2^{ème}) vers le rapport N+1 (par exemple le rapport de 3^{ème}) sous couple moteur (« tirage »), les manchons de crabotage 27 et 28 de ces rapports présentent les états successifs représentés sur la figure 4.

Dans l'état 0 qui est l'état initial, le manchon 28 associé au rapport de 2^{ème} est en position b (rapport verrouillé, avec un jeu de ré-attelage quasi-inexistant). Tandis que le manchon 27 associé au rapport de 3^{ème} est en position a, soit en position neutre.

Ensuite dans l'état 1, le manchon 28 du rapport de 2^{ème} est positionné en position d (auto-éjectable). A cet instant, le couple moteur est toujours transmis par le rapport de démultiplication de 2^{ème}. Le manchon de crabotage 27 du rapport de 3^{ème} se trouve toujours en position a.

Dans l'état 2, le rapport suivant est engagé avec le manchon 27, ce qui a pour effet de faire chuter instantanément la vitesse de l'arbre 7 primaire. La face 43 d'éjection des dents 40 du pignon du rapport de 2^{ème} entre alors en contact 49 avec les dents du manchon du crabot 28, ce qui a pour conséquence d'éjecter le manchon du crabot 28, qui revient en position neutre (rapport désengagé).

Dans l'état 3, on s'assure que le rapport de 2^{ème} est bien désengagé. A cet effet, on peut par exemple utiliser un barillet comportant une rampe de verrouillage mécanique empêchant la fourchette liée au manchon cité de se déplacer axialement.

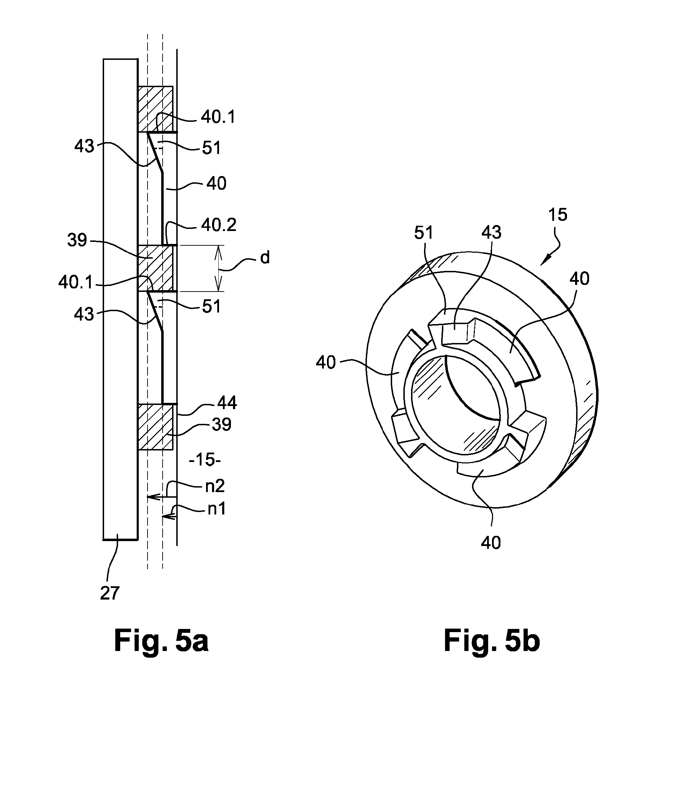

La figure 5a montre une variante de crabots auto-éjectants à 2 étages selon l'invention.

Dans cette réalisation, les dents 40 du pignon fou sont séparées entre elles d'une distance d sensiblement égale à la largeur des dents 39 du manchon 27, pour limiter le jeu de ré-attelage.

Les dents 40 présentent chacune une pente 43. Cette pente 43 s'étend entre les niveaux n1 et n2, et est telle qu'elle permet l'éjection du rapport précédent lorsque les dents 39 entre en coopération avec elle.

Dans une première position (celle représentée) les dents 39 du manchon 27 sont plaquées contre la face 44 radiale du pignon fou 15, entre les dents 40 de ce pignon fou 15. Le rapport de vitesse est alors verrouillé.

Lors de la transmission d'un couple moteur, les dents 39 du manchon 27 prennent appui sur les faces 40.1 de tirage des dents 40. Tandis que lors de la transmission d'un couple de freinage de type frein moteur, les dents 39 du manchon 27 prennent appui sur les faces 40.2 rétro des dents 40.

Dans une deuxième position axiale, les dents 39 du manchon 27 se situent à une distance axiale comprise entre n1 et n2, au niveau des pentes 43. Ainsi, les dents 39 peuvent transmettre du couple en prenant appui contre les faces 40.1 de tirage lorsque la vitesse de rotation du manchon 27 est supérieure à celle du pignon 15.

Dès que la vitesse de rotation du manchon 27 devient inférieure à celle du pignon 15. Les dents 39 suivent alors la rampe 43 et s'éloignent de la face 44 du pignon fou, de sorte que le rapport de vitesse est dégagé.

Ainsi, dans l'invention, le manchon peut prendre plusieurs positions axiales (au moins deux) dont une d'auto-éjection.

En variante, la pente 43 est tronquée de sorte que les dents 40 présente un profil 51 en forme de trapèze. La figure 5b en trois dimensions correspond à ce mode de réalisation.

Ces variantes de crabots à 2 étages sont de préférence associées à un super-synchronisateur monté sur un des rapports de vitesses.

## Revendications

**1.** Boîte (4) de vitesses de type manuelle pilotée comportant :
- un arbre (7) primaire destiné à être relié à un moteur (2) thermique, et un arbre (8) secondaire destiné à être relié aux roues (5) du véhicule, ces deux arbres (7, 8) étant reliés entre eux par des engrenages formant les rapports de vitesse,
- ces engrenages comportant chacun une roue (10-12, 21, 22) solidaire en rotation d'un des arbres et un pignon fou (15-17, 23, 24) monté sur l'autre arbre qui engrènent entre eux, et
- des manchons de crabotage (27-29) associables chacun à deux pignons fous munis de crabots (40), ces manchons de crabotage (27-29) assurant le changement des rapports de vitesse,
**caractérisée en ce que** :
- les crabots des manchons (27-29) et des pignons fous sont auto-éjectants, ces crabots auto-éjectants étant tels qu'ils éjectent le rapport précédent lorsque le nouveau rapport est engagé, sans rupture de couple,
- les manchons de crabotage (27-29) étant associés à un étage (45) de verrouillage du côté des pignons fous (15-17, 23, 24) assurant le verrouillage du rapport de vitesse engagé.

**2.** Boîte de vitesses selon la revendication 1, **caractérisée en ce que** :
- les crabots (40) des pignons fous présentent un profil avec une rampe (43) du côté de leur face rétro.

**3.** Boîte de vitesses selon la revendication 2, **caractérisée en ce que** :
- la rampe (43) présente une pente comprise entre 10 et 40 degrés.

**4.** Boîte de vitesses selon l'une des revendications 1 à 3, **caractérisée en ce que** :
- les pignons fous (15-17, 23, 24) sont rassemblés par paire avec un seul manchon de crabotage (27-29) auto-éjectant par paire,
- le manchon de crabotage d'une paire engageant l'un des deux pignons fous par déplacement dans une direction et l'autre pignon fou par déplacement dans l'autre direction.5 - Boîte de vitesses selon la revendication 4, **caractérisée en ce que** :
- ces paires de pignons fous (15-17, 23, 24) sont montées soit sur l'arbre (7) primaire soit sur l'arbre (8) secondaire.

**6.** Boîte de vitesses selon la revendication 4 ou 5, **caractérisée en ce que** :
- les paires de pignons fous sont agencées d'une manière telle, qu'elle permet d'engager deux rapports numériquement successifs avec des manchons de crabotage différents, notamment dans une configuration de rapport 1-4 ; 2-5 ; 3-6 ou 1-3 ; 4-6 ; 2-5.

**7.** Boîte de vitesses selon l'une des revendications 4 à 6, **caractérisée en ce que** :
- la combinaison des pignons est telle qu'elle permet d'avoir un mouvement des actionneurs pilotant les crabots dans un même sens pour un passage de rapports de vitesse successifs.

**8.** Boîte de vitesses selon l'une des revendications 1 à 7, **caractérisée en ce que** l'arbre (7) primaire est un arbre simple, non concentrique.

**9.** Boîte de vitesses selon l'une des revendications 1 à 8, **caractérisée en ce qu'**elle comporte un deuxième arbre secondaire.

**10.** Procédé de changement de rapport de vitesses montant avec couple moteur positif pour passer d'un rapport initial à un rapport final, ce procédé mettant en oeuvre la boîte (4) de vitesses définie selon l'une des revendications 1 à 9 et comportant les étapes suivantes :
- positionner le crabot (28) du rapport initial en position auto-éjectable (position d),
- engager le rapport final (position b), de sorte que la vitesse de l'arbre (7) primaire chute,
- la face (43) d'éjection des dents (40) du pignon du rapport initial entrant en contact (49) avec les dents du manchon associé au rapport initial de manière à désengager ce rapport initial,
- s'assurer que le rapport initial est désengagé.
